# EUROPEAN PATENT SPECIFICATION

(11) **EP 2 088 904 B1**
(45) Date of publication and mention of the grant of the patent: **10.04.2013**
(21) Application number: 07847677.7
(22) Date of filing: 03.12.2007
(51) Int. Cl.: A47J 31/18

(54) **A COFFEE MACHINE**
KAFFEEMASCHINE
MACHINE À CAFÉ

(30) Priority: 07.12.2006 TR 200606977
(43) Date of publication of application: 19.08.2009
(73) Proprietor: Arçelik Anonim Sirketi, 34950 Istanbul (TR)
(72) Inventor: HASANREISOGLU, Levent, 34950 Istanbul (TR)
(86) International application number: PCT/EP2007/063166
(87) International publication number: WO 2008/068225

(56) References cited:
- WO-A-2006/008583
- US-A- 5 388 501

## Description

The present invention relates to a coffee machine.

In the automatic coffee machines that prepare Turkish coffee in accordance with the customary taste, ground coffee, water, sugar and milk of desired amounts are put into the boiling pot wherein the boiling process is made and the boiling process is started by pressing a button after the boiling pot containing the prepared mixture is placed on the heater. Since Turkish coffee has the characteristic of overflowing by quickly foaming during boiling, the foam has to be prevented from overflowing and in order to prepare Turkish coffee in accordance with the traditional taste and consistency, the rising of the foam has to be controlled and the heating process should be terminated just before reaching the boiling point.

In state of the art Patent Application No W006008583, the level sensor, (infrared sensor), is set to detect the initial level of the mixture that is added to the boiling pot and the froth height limit that every mixture at an initial level will reach after the boiling process and which decides to end the boiling process by detecting the change in froth height of the mixture heated in the boiling pot. In the coffee machine described in this patent application, the number of cups to be prepared in the boiling pot has to be identified by the user to the machine at the beginning. For example, the user initially identifies the quantity by pressing on the start button that signifies one cup for preparing one serving (one cup) of coffee, presses on the start button that signifies two cups if coffee is to be prepared for two persons and the boiling process starts after automatically water suitable for this quantity is pumped into the boiling pot. The initial mixture level measured before the boiling process is accepted as "correct" since water is pumped according to the identified quantity and boiling process is carried on. If ingredients such as water, sugar, coffee, milk are put in the boiling pot by the user and not automatically, the mixture quantity has to be controlled and the boiling process should be implemented according to this mixture quantity.

The aim of the present invention is the realization of a coffee machine wherein different amounts of coffee can be made in a boiling pot maintaining the same quality and preventing overflowing.

The coffee machine realized in order to attain the aim of the present invention is explicated in the claims.

In the coffee machine of the present invention, the mixture is prepared before the boiling process by putting in the ingredients such as coffee, water, sugar and milk in the boiling pot according to the number of cups desired to be served by the user. No matter what quantity of mixture with respect to number of cups is put in the boiling pot by the user before boiling, the height of the mixture in the boiling pot or changes in the mixture height is measured at certain intervals after the boiling starts to decide for how many cups user has prepared the mixture in reality and the coffee cooking program is implemented according to the determined number of cups.

In an embodiment of the present invention, the height of the mixture that is measured in the boiling pot a certain time period after the boiling starts is compared with the prerecorded reference mixture height values to decide on how many cups of mixture the user has prepared.

In another embodiment of the present invention, if the control unit detects any increase (froth rise) in the mixture heights measured by the level sensor at certain intervals after starting the boiling process, decides that mixture for the number of cups that corresponds to the initial height measured is put in the boiling pot, if there is no increase detected in the mixture levels measured by the level sensor, then decides that mixture for more number of cups is put than that corresponding to the initial height of mixture measured.

In another embodiment of the present invention, the control unit compares the height values of the mixture measured at certain intervals during boiling by the level sensor with prerecorded overflowing limit values and if the measured height values are greater than the limit overflowing values, the boiling process is not implemented.

The coffee machine realized in order to attain the aim of the present invention is illustrated in the attached figures, where:

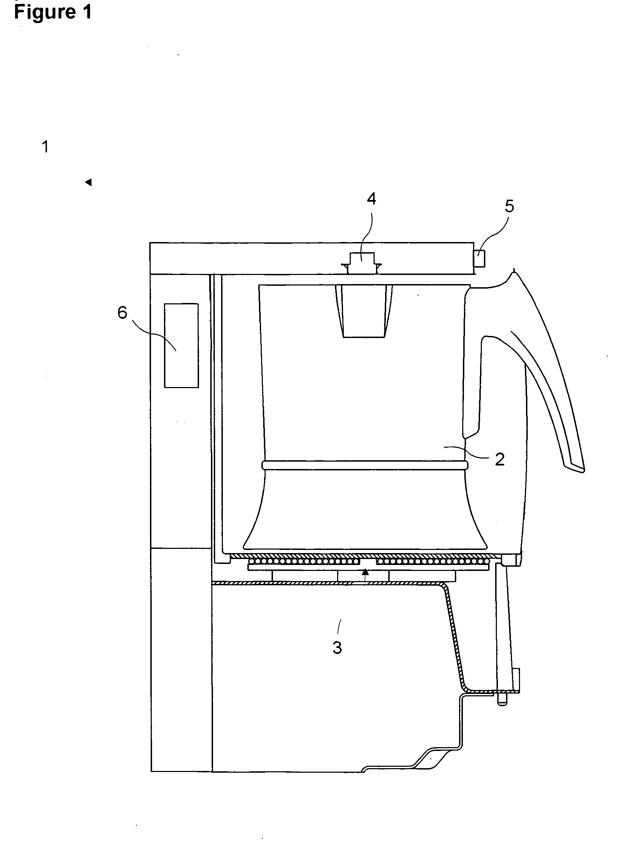

Figure 1 - is the schematic view of a coffee machine.

The elements illustrated in the figures are numbered as follows:

1. Coffee machine

2. Boiling pot

3. Heater

4. Level sensor

5. Start button

6. Control unit

The coffee machine (1) comprises a boiling pot (2) wherein ingredients such as water, coffee, sugar, milk are put to make a liquid mixture and implementing the boiling process of this liquid therein, a heater (3) for heating the boiling pot (2) for a determined period of boiling time, a level sensor (4) for example of the infrared or ultrasonic type that measures the height of the mixture in the boiling pot (2) during boiling and a control unit (6) that controls the boiling process according to data received from the level sensor (4).

For preparing coffee in the coffee machine (1) a mixture is prepared of ingredients such as water, coffee, sugar and milk that is put in the boiling pot (2) by the user, then the boiling pot (2) is placed on the heater (3) for starting the boiling process. The coffee machine (1) also comprises a start button (5) for starting the boiling process. In the boiling pot (2) one cup of coffee (coffee for one person) or multiple cups of coffee can be prepared as desired by the user.

The number of coffee cups (servings) to be served from the boiling pot (2) after the boiling process is completed will be denoted as: n (n = 1, 2, 3, ...).

The control unit (6) evaluates the height of the mixture (H) measured by the level sensor (4) at certain intervals (T) after the start of the boiling process, or the changes in the mixture height (#H) and decides for how many number of cups (n) the user has prepared the mixture before the boiling and implements a coffee cooking program (Pn) according to the decided number of cups (n).

The coffee cooking program (Pn) is defined by at least two parameters which are the initial height (H) of the mixture measured in the boiling pot (2) and the froth rising amount (#Hn) allowed according to the decided number of cups (n).

In an embodiment of the present invention, the predetermined reference mixture heights (H mixture-n) identified separately for each number of cups (n) are recorded in the memory of the control unit (6) for comparing with the mixture height (H) prepared by the user for the desired number of cups (n) by measuring.

The reference mixture heights (Hmixture-n : Hmixture-1, Hmixture-2, ...) are the reference height values compared with the mixture height (H) of water, coffee, sugar, etc. put in the boiling pot (2) to be measured by the level sensor (4) for virtually determining the quantity of the mixture prepared by the user.

In this embodiment, the control unit (6) compares the mixture height value (H) measured by the level sensor (4) a certain time period (T) after the start of boiling process, with the reference mixture heights (H mixture-n) and decides for how many number of cups (n) is the mixture put in the boiling pot (2) by the user before boiling and implements a coffee cooking program (Pn) according to the decided number of cups (n).

For example, in a coffee machine (1) that can make two cups (n=1, 2) of coffee:

If H < Hmixture-1, then decides that mixture for one cup (n=1) of coffee is put in the boiling pot (2) and the coffee cooking program (P1) for one cup is implemented.

If H < Hmixture-2, then decides that mixture for two cups (n=2) of coffee is put in the boiling pot (2) and the coffee cooking program (P2) for two cups is implemented.

In another embodiment of the present invention, the control unit (6) calculates the change in the mixture height (#H = Hi+1 - Hi) by using the data of the mixture height values (Hi, Hi+1) measured by the level sensor (4) (i = 1,...n) at certain intervals (Ti, Ti+1) after the start of boiling process, and by using this information decides for how many number of cups (n) the mixture put in the boiling pot (2) by the user is before boiling and implements a coffee cooking program (Pn) according to the decided number of cups (n).

In this embodiment, if the control unit (6) detects any increase (froth rising) (#H = Hi+1 - Hi > 0) in the mixture heights (Hi, Hi+1) measured by the level sensor (4) at certain intervals (Ti, Ti+1) after the start of boiling process, then decides that a mixture with an initial measured mixture height (Hi) corresponding to the number of cups ( n = " i ") is put in the boiling pot (2).

If the control unit (6) does not detect any increase (froth rising) (#H = Hi+1 - Hi < = 0) in the mixture heights (Hi, Hi+1) measured by the level sensor (4) at certain intervals (Ti, Ti+1) after the start of the boiling process, then decides that a mixture with number of cups ( n > " i " ) more than the number of cups corresponding to the initially measured mixture height (Hi) is put in the boiling pot (2).

In another embodiment of the present invention, the control unit (6) compares the mixture height values (H) measured by the level sensor (4) with the overflowing limit height values (H overflowing limit) and if the measured mixture height values are greater than overflowing limit height values (H > H overflowing limit), ends the boiling process, preventing overflowing. Consequently if the user puts a mixture in the boiling pot (2) that corresponds to more than the predetermined maximum number of cups (n), coffee is not made by ending the boiling process at the start and overflowing is prevented.

In the coffee machine (1) of the present invention, no matter what amount of ingredients is put in the boiling pot (2) by the user, the boiling process is started by the user by only pressing once on the start button (5) without requiring to identify the number of persons to prepare the coffee for, and each quantity of coffee (n = 1, 2, 3, ...) in the boiling pot (2) is prepared in accordance with the expected taste and consistency and overflowing is prevented.

## Claims

1. A coffee machine (1) comprising a boiling pot (2) wherein ingredients such as water, coffee and sugar are put to make a liquid mixture, implementing the boiling process of this liquid therein, a heater (3) for heating the boiling pot (2) for a determined period of boiling time, a level sensor (4) that measures the height of the mixture in the boiling pot (2) during boiling and a control unit (6) that controls the boiling process according to data received from the level sensor (4), and **characterized by** said control unit (6) being
a) adapted to evaluate the height of the mixture (H) measured by the level sensor (4) at certain intervals (T) after the start of the boiling process or the changes in the mixture height (#H),
b) adapted to decide for how many number of cups (n) the user has prepared the mixture before boiling using the information of a), and
c) adapted to implement a coffee cooking program (Pn) according to the decided number of cups (n).

2. A coffee machine (1) as in Claim 1, **characterized by** the control unit (6) which implements a coffee cooking program (Pn) that is defined by at least two parameters which are the initial height (H) of the mixture measured in the boiling pot (2) and the froth rising amount (#Hn) allowed according to the decided number of cups (n).

3. A coffee machine (1) as in Claim 1 or 2, **characterized by** the control unit (6) wherein the predetermined reference mixture heights (H mixture-n) identified separately for each number of cups (n) are recorded in the memory thereof for comparing with the mixture height (H) prepared by the user for the desired number of cups (n) by measuring.

4. A coffee machine (1) as in Claim 3, **characterized by** the control unit (6) that compares the mixture height value (H) measured by the level sensor (4) a certain time period (T) after the start of boiling process, with the reference mixture heights (H mixture-n) and decides for how many number of cups (n) is the mixture put in the boiling pot (2) by the user before boiling.

5. A coffee machine (1) as in Claim 1 or 2, **characterized by** the control unit (6) that calculates the change in the mixture height (#H = Hi+ 1 - Hi) by using the mixture height values (Hi, Hi+ 1) measured by the level sensor (4) (i = 1,...n) at certain intervals (Ti, Ti+ 1) after the start of boiling process, and by using this information decides on the number of cups (n) in the mixture prepared by the user and put in the boiling pot (2).

6. A coffee machine (1) as in Claim 5, **characterized by** the control unit (6) that decides that a mixture with an initial measured mixture height (Hi) corresponding to the number of cups ( n = " i " ) is put in the boiling pot (2) if any increase (froth rising) (#H = Hi+ 1 - Hi > 0) is detected in the mixture heights (Hi, Hi+ 1) measured by the level sensor (4) (i = 1,...n) at certain intervals (Ti, Ti+ 1) after the start of boiling process.

7. A coffee machine (1) as in Claim 5, **characterized by** the control unit (6) that decides that a mixture with a number of cups ( n > " i " ) that is more than the number of cups corresponding to the initial measured mixture height (Hi) is put in the boiling pot (2) if any increase (froth rising) is not detected (#H = Hi+1 - Hi < = 0) in the mixture heights (Hi, Hi+1) measured by the level sensor (4) at certain intervals (Ti, Ti+1) after the start of boiling process.

8. A coffee machine (1) as in any one of the above claims, **characterized by** the control unit (6) that compares the mixture height values (H) measured by the level sensor (4) with the pre-recorded overflowing limit height values (H overflowing limit) and if the measured mixture height values are greater than the overflowing limit height values (H > H overflowing limit) ends the boiling process.

## Patentansprüche

1. Kaffeemaschine (1), umfassend einen Brühbehälter (2), in den Zutaten wie Wasser, Kaffee und Zucker gegeben werden, um ein flüssiges Gemisch herzustellen, um den Brühprozesses dieser Flüssigkeit darin zu implementieren, eine Heizeinrichtung (3) zum Erwärmen des Brühbehälters (2) für eine im Voraus festgelegte Brühzeit, einen Pegelsensor (4), der die Höhe des Gemischs im Brühbehälter (2) während des Brühens misst, und eine Steuereinheit (6), die den Brühprozess entsprechend Daten steuert, die sie vom Pegelsensor (4) empfängt, und **dadurch gekennzeichnet, dass** die Steuereinheit (6)
a) dazu angepasst ist, die Höhe des Gemischs (H), die vom Pegelsensor (4) in bestimmten Intervallen (T) nach dem Beginn des Brühprozesses gemessen wird, oder die Änderungen der Gemischhöhe (#H) zu beurteilen,
b) dazu angepasst ist, anhand der Informationen von a) zu entscheiden, für wie viele Tassen (n) der Benutzer das Gemisch vor dem Brühen zubereitet hat, und
c) dazu angepasst ist, ein Kaffeebrühprogramm (Pn) entsprechend der bestimmten Anzahl von Tassen (n) zu implementieren.

2. Kaffeemaschine (1) nach Anspruch 1, **dadurch gekennzeichnet, dass** die Steuereinheit (6) ein Kaffeebrühprogramm (Pn) implementiert, das von wenigstens zwei Parametern definiert wird, bei denen es sich um die im Brühbehälter (2) gemessene Anfangshöhe (H) des Gemischs und die entsprechend der bestimmten Anzahl von Tassen (n) zulässige Schaumanstiegshöhe (#Hn) handelt.

3. Kaffeemaschine (1) nach Anspruch 1 oder 2, **dadurch gekennzeichnet, dass** bei der Steuereinheit (6) die im Voraus festgelegten Bezugsgemischhöhen (H mixture-n/Gemisch-n), die separat für jede Anzahl von Tassen (n) identifiziert sind, im Speicher derselben aufgezeichnet sind, um sie mit der Höhe (H) des Gemischs zu vergleichen, das vom Benutzer durch Messen für die gewünschte Anzahl von Tassen (n) zubereitet wurde.

4. Kaffeemaschine (1) nach Anspruch 3, **dadurch gekennzeichnet, dass** die Steuereinheit (6) den Wert der Gemischhöhe (H), der von dem Pegelsensor (4) in einem bestimmten Zeitraum (T) nach dem Beginn des Brühprozesses gemessen wird, mit den Bezugsgemischhöhhen (H mixture-n/Gemisch-n) vergleicht und bestimmt, für wie viele Tassen (n) das Gemisch vom Benutzer vor dem Brühen in den Brühbehälter (2) gegeben wurde.

5. Kaffeemaschine (1) nach Anspruch 1 oder 2, **dadurch gekennzeichnet, dass** die Steuereinheit (6) die Änderung in der Gemischhöhe (#H = Hi+ 1 - Hi) mithilfe der Gemischhöhewerte (Hi, Hi+ 1) berechnet, die vom Pegelsensor (4) (i= 1,...n) in bestimmten Intervallen (Ti, Ti+ 1) nach dem Beginn des Brühprozesses gemessen wurden, und anhand dieser Informationen die Anzahl der Tassen (n) im Gemisch bestimmt, das vom Benutzer zubereitet und in den Brühbehälter (2) gegeben wurde.

6. Kaffeemaschine (1) nach Anspruch 5, **dadurch gekennzeichnet, dass** die Steuereinheit (6) bestimmt, dass ein Gemisch mit einer anfangs gemessenen Gemischhöhe (Hi) der Anzahl von Tassen (n= "i") in den Brühbehälter (2) gegeben wurde, wenn eine Erhöhung (Schaumanstieg) (#H= Hi+ 1 - Hi > 0) in den Gemischhöhen (Hi, Hi+ 1) erkannt wird, die vom Pegelsensor (4) (i= 1, ...n) in bestimmten Intervallen (Ti, Ti+ 1) nach dem Beginn des Brühprozesses gemessen werden.

7. Kaffeemaschine (1) nach Anspruch 5, **dadurch gekennzeichnet, dass** die Steuereinheit (6) bestimmt, dass ein Gemisch mit einer Anzahl von Tassen (n > "i"), die größer als die Anzahl von Tassen ist, die der anfangs gemessenen Gemischhöhe (Hi) entspricht, in den Brühbehälter (2) gegeben wurde, wenn keine Erhöhung (Schaumanstieg) (#H= Hi+ 1 - Hi < = 0) in den Gemischhöhen (Hi, Hi+ 1) erkannt wird, die vom Pegelsensor (4) in bestimmten Intervallen (Ti, Ti+ 1) nach dem Beginn des Brühprozesses gemessen werden.

8. Kaffeemaschine (1) nach einem der vorangehenden Ansprüche, **dadurch gekennzeichnet, dass** die Steuereinheit (6) die Gemischhöhewerte (H), die vom Pegelsensor (4) gemessen werden, mit den im Voraus aufgezeichneten Überlaufgrenzhöhenwerten (H overflowing limit/Überlaufgrenze) vergleicht, und wenn die gemessenen Gemischhöhenwerte über den Überlaufgrenzhöhenwerten liegen (H > H overflowing limit/Überlaufgrenze), den Brühprozess beendet.

## Revendications

1. Une machine à café (1) comprenant un pot d'ébullition (2) dans lequel les ingrédients tel que l'eau, le café et le sucre sont mis à faire un mélange liquide et qui met en oeuvre le processus d'ébullition de ce liquide y contenu, un appareil de chauffage (3) pour le chauffage du pot d'ébullition (2) pendant une période déterminée de temps d'ébullition, un capteur de niveau (4) qui mesure la hauteur du mélange dans le pot d'ébullition (2) lors de l'ébullition et une unité de commande (6) qui contrôle le processus d'ébullition selon les données reçues du capteur de niveau (4), **et caractérisée par** ladite unité de commande (6) étant
a) adaptée à évaluer la hauteur du mélange (H) mesurée par le capteur de niveau (4) à certains intervalles (T) après le début du processus d'ébullition ou des changements dans la hauteur du mélange (#H),
b) adaptée à déterminer combien de tasses (n) du mélange l'utilisateur a préparé avant l'ébullition en utilisant les informations dans a), et
c) adaptée à exécuter un programme de cuisson de café (Pn) selon le nombre de tasses (n) déterminé.

2. Une machine à café (1) selon la Revendication 1, **caractérisée par** l'unité de commande (6) qui exécute un programme de cuisson de café (Pn) qui est défini par au moins deux paramètres qui sont la hauteur initiale (H) du mélange mesurée dans le pot d'ébullition (2) et la quantité de montée de mousse (#Hn) permise selon le nombre de tasses (n) déterminé.

3. Une machine à café (1) selon la Revendication 1 ou 2, **caractérisée par** l'unité de commande (6) où les hauteurs du mélange de référence prédéterminées (H mixture-n/mélange-n) séparément pour chaque nombre de tasses (n) sont enregistrées dans la mémoire de celle-là pour comparer la hauteur du mélange (H) préparée par l'utilisateur pour le nombre de tasses désiré (n) en mesurant.

4. Une machine à café (1) selon la Revendication 3, **caractérisée par** l'unité de commande (6) qui compare la valeur de la hauteur du mélange (H) mesurée par le capteur de niveau (4) à une certaine période de temps (T) après le début du processus d'ébullition avec les hauteurs du mélange de référence (H mixture-n/mélange-n) et qui détermine combien de tasses (n) du mélange l'utilisateur a mis dans le pot d'ébullition (2) avant l'ébullition.

5. Une machine à café (1) selon la Revendication 1 ou 2, **caractérisée par** l'unité de commande (6) qui calcule la variation dans la hauteur du mélange (#H = Hi+ 1 - Hi) en utilisant les valeurs de la hauteur du mélange (Hi, Hi+1) mesurées par le capteur de niveau (4) (i= 1, ...n) à certains intervalles (Ti, Ti+1) après le début du processus d'ébullition, et qui détermine, en utilisant ces informations, le nombre de tasses (n) du mélange préparées par l'utilisateur et mises dans le pot d'ébullition (2).

6. Une machine à café (1) selon la Revendication 5, **caractérisée par** l'unité de commande (6) qui décide que un mélange avec une hauteur du mélange mesurée initialement (Hi) correspondant au nombre de tasses (n = « i ») est mis dans le pot d'ébullition (2) si l'on détecte une augmentation (montée de mousse) (#H = Hi+ 1 - Hi > 0) dans les hauteurs du mélange (Hi, Hi+1) mesurées par le capteur de niveau (4) (i = 1, ...n) à certaines intervalles (Ti, Ti+1) après le début du processus d'ébullition.

7. Une machine à café (1) selon la Revendication 5, **caractérisée par** l'unité de commande (6) qui décide que un mélange en un nombre de tasses (n > « i ») qui est plus que le nombre de tasses correspondant à la hauteur du mélange (Hi) mesurée initialement est mis dans le pot d'ébullition (2) si l'on ne détecte aucune augmentation (montée de mousse) (#H = Hi+ 1 - Hi < = 0) dans les hauteurs du mélange (Hi, Hi+1) mesurées par le capteur de niveau (4) à certaines intervalles (Ti, Ti+1) après le début du processus d'ébullition.

8. Une machine à café (1) selon l'une quelconque des revendications précédentes, **caractérisée par** l'unité de commande (6) qui compare les valeurs de la hauteur du mélange (H) mesurées par le capteur de niveau (4) avec les valeurs de hauteur limite de débordement prédéterminées (H overflowing limit/limite de débordement) et qui termine le processus d'ébullition si les valeurs de hauteur du mélange mesurées sont plus que les valeurs de hauteur limite de débordement (H > H overflowing limit/limite de débordement).
